# EUROPEAN PATENT SPECIFICATION

(11) **EP 0 964 616 B1**
(45) Date of publication and mention of the grant of the patent: **02.01.2003**
(21) Application number: 98904665.1
(22) Date of filing: 22.01.1998
(51) Int. Cl.: A01N 43/16

(54) **METHOD FOR TREATING COTYLEDONOUS PLANTS**
VERFAHREN ZUR BEHANDLUNG VON KEIMBLÄTTRIGEN PFLANZEN
PROCEDE DE TRAITEMENT DE PLANTES A COTYLEDONS

(30) Priority: 23.01.1997 US 787870
(43) Date of publication of application: 22.12.1999
(73) Proprietor: Arkion Life Sciences LLC, Wilmington, DE 19810 (US)
(72) Inventor: HEINSOHN, George, E., Elkton, MD 21921 (US); BJORNSON, August, S., Wilmington, DE 19803 (US)
(74) Representative: Jones, Alan John
(86) International application number: US9801331
(87) International publication number: WO98032335

(56) References cited:
- WO-A-89/01288
- WO-A-89/07395
- DE-A- 19 525 591
- US-A- 4 853 429
- US-A- 4 886 541
- US-A- 4 964 894
- US-A- 5 374 627
- DATABASE WPI Section Ch, Week 9702 Derwent Publications Ltd., London, GB; Class A97, AN 97-017255 XP002067188 & JP 08 283 104 A (LION CORP)
- DATABASE WPI Section Ch, Week 8812 Derwent Publications Ltd., London, GB; Class C03, AN 88-080717 XP002067189 & JP 63 033 310 A (IHARA CHEM IND CO LTD)
- DATABASE WPI Section Ch, Week 8842 Derwent Publications Ltd., London, GB; Class C03, AN 88-296419 XP002067190 & JP 63 216 804 A (MEIJI SEIKA KAISHA)

## Description

### FIELD OF INVENTION

The Invention is directed to a method for treating cotyledonous plants to improve the yield, health, and vigor of the plant by spraying an aqueous solution of a chitosan salt onto the leaves of the plant.

### BACKGROUND OF THE INVENTION

Chitosan is a naturally occurring polymer found in many fungi. It may be broadly described as a copolymer of D-glucosamine and N-acetyl-D-glucosamine in which 65-100 % of the monomer units are D-glucosamine. Since it is a member of the chemical class known as amines, which are weakly basic, it readily and reversibly forms salts with acids such as mineral acids and carboxylic acids. Many of these salts are water soluble. In a system in which chitosan and an acid are present, both electrically neutral glucosamine units and units in which the glucosamine unit is protonated and associated with the anion corresponding to the acid will be present in the polymer chain in proportions which are dependent on pH. Such a system is commonly referred to as a chitosan salt without regard to the extent to which the glucosamine units are protonated.

As used herein, the term "chitosan salt" includes not only chitosan salt, but also any partially unprotonated chitosan which may be present in acidic media.

It has been demonstrated that application of chitosan salt to the seeds of cereal crops results in dramatic changes in the biochemistry of the emergent plant. Included among these changes are an increased production of a class of compounds known as the phytoalexins which provide protection against localized microbial infection, and increased production of callose and lignin which provide structural strength and a barrier to the spread of infection. These changes occur as a result of activation of the gene encoding the enzyme *phenylalanine ammonia lyase* which is involved in the rate determining step of the phenylpropanoid metabolism pathway. The chitosan salt has been shown to induce synthesis of the terpenoid phytoalexins which are closely involved in the biosynthesis of growth hormones such as gibberelic acid and abscisic acid . Chitosan salt also induces activation of genes which produce chitinase and glucanase enzymes that are known to be both fungal inhibitors and to play a role in pollen development and seed germination, and also induces activation of genes which produce protease inhibitors that help protect the plant from insect attack. These changes result in enhanced root development, reduced lodging (plants falling over before harvest), enhanced yield, and resistance to certain plant diseases.

In US 4,812,159, Freepons discloses, in detail, treatment of soil in the seed planting zone with an aqueous solution of chitosan salt, application of a chitosan salt solution to plant seeds, treatment of soil in the seed planting zone with a mixture of solid chitosan and a solid acid, and treatment of soil in the seed planting zone with a solid chitosan salt. The preferred chitosan salt solution is one that contains more than 1.5 equivalents of glutamic acid per mole of amino function in the chitosan. Application of chitosan salt to the foliage of an emerging plant is mentioned, but there is no disclosure of the methods required to accomplish such treatment, nor of the results thereby achieved. For all of these treatments it is stipulated that when an acidic component is used in making the chitosan salt preparation, the acid must be selected from the group of non-phytotoxic acids, defined as those that will not cause a significant adverse effect on germination of seeds or on the developing seedling.

US 4,964,894, which is a continuation-in-part of US 4,812,159, Freepons notes that glutamic acid, tartaric acid, citric acid, adipic acid, hydrochloric acid, formic acid, and nitric acid meet the criteria of non-phytotoxicity. Acetic acid and butyric acid were found to be phytotoxic and harmful to the development of the plant seedling . This would make these acids unsuitable for use according to the teachings therein.

According to the teachings of US 4,812,159, the treatment of seed is accomplished_by applying a chitosan preparation to seed or by immersing the seed in such a preparation, followed by a drying operation. The drying operation is necessary to prevent premature germination of the seed in the time interval between treatment and planting. In the absence of a drying step, the patent recommends that planting occur within 60 hr of seed treatment.

While seed treatment is easily accomplished on a small scale using the methods disclosed therein, the treatment protocols are difficult to extend to commercial scale operations without devising specialized equipment or modifying equipment commonly used in the seed coating industry such as grain augering devices like the Gustavson seed coater. This is a serious drawback in commercial operations where the same piece of equipment must also be used to apply other treatments (e.g. fungicides) to seeds and cannot be dedicated for use only with chitosan-containing materials. Furthermore, such treatment is limited to a single application of chitosan salt at the very earliest stage of plant growth, which may not be repeated and reinforced at other key stages of plant growth such as flowering, seed formation, and ripening.

Treatment of soil in the seed planting zone with a chitosan salt preparation requires that the preparation be distributed in a region in close proximity to where the seed will be, or has been, planted. Specialized equipment is therefore required to target the treatment to the region where the seed will eventually germinate. While this may be readily accomplished in the case of mechanized seeding, this technique is not compatible with other methods such as aerial seeding or broadcast seeding. In addition, the two techniques utilizing chitosan salt in the form of a solid require that the solid be introduced in the form of very small particles of 0.5-100 micrometers. Therefore elaborate pre-processing of the chitosan salt is required to put it in a form suitable for application. As with seed treatment, treatment of soil in the region of seed germination is limited to a single treatment at the very earliest stage of plant growth, lest the root system of the plant be disrupted.

Since no method is disclosed for application of chitosan to the foliage of the emerging plants, it is difficult to ascertain the practicality of this technique or to assess the degree to which it provides beneficial effect. Clearly though, it shares with the other methods the limitation that treatment is constrained to the earliest stage of plant growth.

In US 4,964,894, Freepons describes again the same techniques noted above and then declares an elaborate procedure involving seed germination studies for identifying non-phytotoxic acids. Glutamic acid, tartaric acid, citric acid, adipic acid, hydrochloric acid, formic acid, and nitric acid met the criteria for non-phytotoxicity. Acetic acid and butyric acid were found to be phytotoxic and detrimental to development of the seedling. The preferred chitosan salt solution is taught to be one that contains more than 1.5 equivalents of glutamic acid per mole of amino function in the chitosan.

Another seed treating technique is described in US 5,554,445 (Kivekas, Struszczyk), which involves spraying seeds with a liquid dispersion of microcrystalline chitosan, followed by drying to form a polymer film around the seed. In order to form an appropriate film on the seed, the chitosan is specified to have a water retention value of 200-5,000%, hydrogen bonding potential of 10-25 kJ/mol, and particle size of 0.1-100 micrometers. As in the cases noted above, these procedures require specialized equipment, elaborate pre-processing of the chitosan, and are limited to a single treatment at the earliest stage of plant growth.

In US 4,886,541, Hadwiger discloses the application of a chitosan preparation to wheat seed in order to enhance yield, reduce lodging, and enhance root development. Treatment is accomplished by applying an aqueous solution of chitosan acetate to the seed in a manner such that the seed is agitated to disburse the liquid on the seed. Recommended techniques are the use of a grain augering device or cement mixing equipment. As discussed above, application of chitosan to seeds by the teachings of this disclosure adds complexity and cost to commercial seed coating, and is limited to a single application at the earliest stage of plant growth. In US 4,978,381 and US 5,104,437 describes the same techniques for seed treatment and provides additional examples to extend the method to other cereal crops such as rice, oats, barley, and rye.

Chitosan has been employed in agriculture for purposes other than its ability to enhance crop yields. It has demonstrated ability as a bactericide against a variety of microorganisms. The use of chitosan to inhibit frost damage is disclosed in JP 99346061 (assigned to Daiiche Seimo KK) wherein spinach leaves inoculated with the ice-nucleating organisms *Pseudomonas syringe* and *Pantoea agglomerants* were treated with chitosan and then exposed to freezing temperature. The treated leaves had significantly less frost damage than the controls. In US 5,374,627, Etsuzo et al disclose the use of a chitosan hydrolysate of molecular weight 10,000- 50,000 for protecting plants against a number of plant diseases such as bacterial soft rot (vegetables), spring deadspot (turfgrass), and bacterial grain rot (rice). In JP-A-63033310, assigned to Ihara Chemical Industries, Ltd., the use of chitin or chitosan salts is disclosed for the treatment of plant roots. Furthermore, in WO 89/07395, assigned to Bentech Laboratories, Inc., is disclosed the application of chitosan salt to crops to oenhance protein content, improve resistance to fungi and increase yield.

### SUMMARY OF THE INVENTION

The Invention is therefore directed to the application of a chitosan salt to the foliage of growing plants to enhance health, vigor and the yields of vegetables, seeds, fruits, tubers, and blossoms. Plants so treated are healthier, more drought resistant, and many varieties enjoy an extended production period. The treatment may be repeated throughout the growth cycle of the plant, especially during critical stages of plant growth such as flowering, seed formation, and ripening.

The invention is therefore directed primarily to a method for improving the yield, health, and vigor of growing cotyledonous plants comprising (1) spraying onto the foliage between appearance of the first true leaves and harvest of the plant or fruit therefrom an aqueous solution containing dissolved therein 0.01-1.5% by weight of a water-soluble salt of chitosan and acid, in which solution the ratio of acid equivalents to amino groups derived from the chitosan is 1.02-1.20, and (2) repeating step (1) at least one time before harvesting the plant or useful portion thereof.

In a further aspect, the invention is directed a method for preparing an aqueous liquid solution suitable for the treatment of growing cotyledonous plants having their first true leaves comprising:
(1) forming an aqueous liquid solution comprising a water-soluble salt of chitosan prepared by reaction at a temperature of 45 to 85°C of a water-soluble chitosan containing at least 65 mole % D-glucosamine residues and a molecular weight of at least 50,000, with an acid which forms water-soluble salts with chitosan, excluding sulfuric and phosphoric acids, in which solution the ratio of acid equivalents to amino groups derived from the chitosan is 1.02-1.20; and
(2) diluting the chitosan salt solution from step (1) with water such that an aqueous liquid solution having dissolved therein 0.01-1.5 wt% of a water soluble salt of chitosan is provided.

### DEFINITION:

As used herein, the term "harvest" and various forms thereof refer not only to gathering the useful or edible portion of growing plants, but also to gathering the entire plant. Examples of the former are picking fruit from trees, picking beans from vines, picking ears of corn from the stalks, cutting cabbage and celery, etc. Examples of the later are the digging of root vegetables such as potatoes, beets, and carrots.

### DETAILED DESCRIPTION OF THE INVENTION

### A. Composition of Chitosan

Though chitosan is a naturally occurring polymer found in many fungi, it is neither abundant nor readily isolated in high purity from natural sources. As a matter of convenience, chitosan is more readily obtained from chitin which (after cellulose) is the second most abundant natural polymer. Chitin is readily isolated from shellfish or insect exoskeletons, and is also found in mollusks and fungi. It is a water insoluble copolymer of N-acetyl -D- glucosamine and D-glucosamine, but the great preponderance of monomer units consist of N-acetyl-D-glucosamine residues. Chitosan is a copolymer of the same two monomer units, but the preponderance of monomer units are D-glucosamine residues. Since the D-glucosamine residues bear a basic amino function, they readily form salts with acids. Many of these salts are water soluble. Treatment of chitin with concentrated caustic at elevated temperature converts N-acetyl-D-glucosamine residues into D-glucosamine residues and thereby converts chitin into chitosan. A convenient method of obtaining chitosan from the chitin found in shellfish waste is described in US 3,862,122 (Peniston). Although there is a continuum of compositions possible between pure poly-N-acetyl-D-glucosamine and pure poly-D-glucosamine, the term chitosan is generally applied to those polymers containing 65-100 % of D-glucosamine residues. Compositions within this range are soluble in acidic solutions as noted above, but if more than about 35 % of the monomer residues are N-Acetyl-D-glucosamine the polymer is insoluble in weakly acidic solutions.

Commercially available chitosan is typically prepared from shellfish and has a molecular weight measured in the hundreds of thousands, corresponding to polymer chains in which several thousand monomer units are linked together in β-1,4 fashion. Chitosan obtained from fungal sources is typically of somewhat lower molecular weight and may contain fractions with molecular weight as low as 50,000 amu (atomic mass units, daltons). For present purposes the term chitosan is intended to apply to copolymers of D-glucosamine and N-acetyl-D-glucosamine containing 0-35 % N-acetyl-D-glucosamine residues and having a molecular weight at least 50,000 amu, and to exclude chitosan preparations in which deliberate efforts have been made to lower the molecular weight below 50,000 amu by causing chain scission with an acid or an enzyme catalyst. The chitosan used in this study was obtained from shrimp or crab shell, and contained about 75-82 mole% D-glucosamine residues which is typical of commercially produced chitosan. It was readily soluble in dilute aqueous solutions of mineral and carboxylic acids.

Chitosan salt may be applied to the foliage of growing plants by spraying with a solution of a chitosan salt, by spraying with a chitosan salt dispersion such as in a wettable powder, or by other techniques which will be readily apparent to one skilled in the art. The preferred technique is by spraying with an aqueous solution of a chitosan salt which eliminates the problems associated with settling of dispersions, or the dust inhalation hazard associated with applying solids to the plant. It is preferred to use solutions having a chitosan salt concentration (exclusive of anion) of 0.05 to 0.50%. Solutions in this concentration range have viscosities compatible with commercial spraying equipment. Furthermore, they require an application rate of 5-20 gallons per application per acre to achieve correct dosage which is again compatible with the normal operation of commercial spraying equipment.

### B. Acids

Many of the acids which form water soluble chitosan salts are themselves detrimental to growing plants, which makes it important to prevent exposure of the plants to high concentrations of these acids. On the other hand, unless a large excess of acid (measured as equivalents of acid per mole of amino function in the chitosan) is employed to prepare the chitosan salt solution, chitosan dissolves only very slowly in acidic solution at ambient temperature. One technique for solving this dilemma is to select only those more expensive acids which are least phytotoxic, such as glutamic acid, so that a large excess of acid can be used to form the solution while limiting damage to the plant. A second technique is to employ a large excess of acid during the dissolution step and then neutralize the excess with base after dissolution is complete. However, this procedure is unsatisfactory since great care is required to prevent localized pH excursions in the region where the base is introduced. Such excursions convert the chitosan salt back into electrically neutral chitosan which precipitates from solution. The precipitate is very slow to redissolve since there is no longer a large excess of acid present. A preferred technique is to use only a very small excess of inexpensive acid and to perform the dissolving step at elevated temperature. By strictly limiting the excess of acid employed, the phytotoxic effect of the acid can be reduced to undetectable levels. Satisfactory rates of dissolution can be achieved, even with only a slight excess of acid, by performing the dissolution at elevated temperature. It is most preferred to use acetic acid at a ratio of 1.02 - 1.20 moles acetic acid per mole of amino groups in the chitosan. This is in sharp contrast to the teachings of US 4,812,159 and US 4,964,894, which found acetic acid to be phytotoxic and therefore unsuitable for forming chitosan solutions to be used for applications described therein. It is preferred to perform the dissolving step at 50-75C. In this fashion, chitosan can be dissolved at a 2.5% wt. concentration in 3-5 hr. This concentration is suitable for efficient transport to the application site, and is of a sufficiently low viscosity that on-site dilution with water is straightforward.

Suitable acids for making the chitosan salts for use in the invention are those which form water-soluble salts with chitosan. It is not necessary that the acid itself be water-soluble; however, such water-soluble acids are preferred because of ease in handling them. Inorganic acids, which form water-soluble chitosan salts, include the halogen acids and nitric acid, but exclude sulfuric and phosphoric acids because they do not form water-soluble salts with chitosan. Organic acids are preferred and include: lactic acid, glycolic acid, glutamic acid, acetic acid and mixtures thereof. Either mono-or poly-functional carboxylic acids can be used. They can be aliphatic or aromatic, so long as they form water-soluble salts with chitosan.

### C. Additives

As used herein, the term "additives" refers to materials which may optionally be used to augment the effectiveness of the invention, but do not themselves have bio-activity. These include such materials as surfactants, wetting agents, defoaming agents, extenders, penetrants, activators, spreading agents, diluents, odorants, brightening agents and the like. It is particularly preferred to use a small amount of wetting agent in the compositions in order to obtain even distribution and wetting of the hydrophobic surface of the plant leaves. Such agents are usually used in concentrations of 0.01-0.1% by weight.

### D. Coadjuvants

As used herein, the term "coadjuvant" refers to optionally added materials that have a bio-activity that may be the same or different than the bio-activity of the chitosan salts. Such materials include fertilizers, fungicides, insect repellants, pesticides, trace nutrients, herbicides, and mixtures thereof. Both liquid and solid coadjuvants can be used in conjunction with water-soluble chitosan salts, so long as the resultant aqueous compositions are sprayable.

### E. Method for Making Chitosan Salt

A preferred method for making the chitosan salt is to form an aqueous dispersion of chitosan at a temperature of 45-85C and preferably at 55-75C and then to add the acid to the dispersion. Under these reaction conditions, the particle size of the chitosan is not critical. It is preferred that the reaction temperature be at least 45C in order to have a rapid rate of reaction without the necessity of using a large excess of acid. On the other hand, it is preferred that the reaction temperature not exceed 85C in order to avoid discoloration and to assure stability of the water-soluble salt. Additives and coadjuvants can be added to the reaction solution at any stage. Nevertheless, it is preferred that they be added after the reaction is complete and the solution has cooled, in order to minimize any secondary reactions.

### F. Method of Application

One clear advantage of the invention is that the chitosan salt can be applied to the plants by liquid spraying, which is the most economical and efficient method of application for both large and small agricultural areas. The aqueous compositions can be applied by other liquid application methods such as brushing, however, they are less efficient and therefore not preferred.

As mentioned above, compositions of the invention are applied to the first true leaves of the growing plant and at least once again before harvesting of the plant, preferably at flowering and at the onset of maturation. Multiple applications are still further preferred.

It is not necessary to evaporate the applied chitosan salt solution after application. In fact, it is preferred not to do so for the reason that adsorbtion of the chitosan salt into the plant takes place from the liquid state. However, evaporation of the solution to dryness will usually take place due to normal atmospheric conditions of temperature and humidity.

### G. Safety

A further advantage of the invention is that the chitosan compositions are non-toxic. For example, chitosan glutamate has an acute oral LD₅₀ of more than 5g/kg in rats (5 male, 5 female albino rats). Furthermore, the compositions have an acute dermal LD₅₀ greater than 2g/kg on rabbits (5 male, 5 female albino rabbits). Because of such low toxicity, the compositions of the invention are not toxic to birds, mammals, or humans. Moreover, the low toxicity level and easy biodegradability of the compositions act to prevent detrimental effects on the beneficial constituents of fertile soil layers. Accordingly, the EPA has established an exemption from the requirement of a tolerance for residues of poly-D-glucosamine, when they are used in the production of raw agricultural commodities.

### H. Test Procedures

An aqueous chitosan acetate solution was prepared by vigorously stirring an appropriate amount of water at a temperature of 60C and adding small flakes of chitosan containing 80 mole % D-glucosamine residues at such a rate that the chitosan became wetted and dispersed throughout the liquid phase. Glacial acetic acid was then added in the ratio of 0.36 lb. of acetic acid per pound of chitosan. This represents a ratio of 1.03 equivalents of acetic acid per mole of amino function in the chitosan. The mixture was stirred at 60C until substantially all the chitosan had dissolved, and the resulting solution was then filtered through coarse cheese cloth to remove any adventitious particles. The quantities of water and chitosan were chosen so that the chitosan concentration (exclusive of the acetate anion) was 5.0% wt. This solution was then further diluted with water to a concentration of 2.5% wt., and packaged in units containing 304g. for transport to the field. On-site dilution of the package provided the correct amount of chitosan to fill a 2 gallon garden sprayer with a solution containing 0.1% wt. chitosan.

For crops that were planted as seed (squash, cucumber, bean), treatment was commenced as soon as the seedling had produced its first set of true leaves. The true leaves are those which follow the emergent leaves (cotyledons) and resemble the leaves of the mature plant in shape. For crops that were obtained as established greenhouse seedlings (peppers), treatment was commenced at the time of transplanting outdoors. In either case, the treatment was repeated at intervals of two to three weeks throughout the growing season. The treatment protocol was to spray the foliage of the plant until the top of the leaf surfaces were thoroughly wetted and solution began to drip from the leaf tips. To the extent possible, this treatment was performed just after irrigation so that there was no substantial difference in moisture available to the treated plants compared to the controls. As the plants increased in size, it was obviously necessary to use more chitosan salt solution to wet the leaves. It was estimated that the treatment rate was 7 gallons/acre for the initial treatment and 15 gallons/acre at end of treatment. For crops that are optimally harvested before the mature stage, such as cucumbers and squash, the number of fruits, rather than total weight, was used as the measure of enhanced production. For crops that are harvested at maturity, such as beans, total crop weight was used as the measure of enhanced production.

### I. Treatable Plants

A wide variety of cotyledonous plants can be advantageously treated by the method of the invention, so long as the treatment is carried out in the manner described above. Such plants include members of the genera *Allium, Appium, Asparagus, Beta, Brassica, Capsicum, Citrullis, Cucurbita, Daucus, Frageria, Lactuca, Lycopersicum, Phaseolus, Solanum, Spinachia and Zea*. Among the members of these genera of vegetables are asparagus, beans, beets, broccoli, carrots, celery, corn, egg plant, lettuce, melons, onions, pea, peppers, potatoes, spinach, squash, strawberries and tomatoes.

### EXAMPLES

### Example 1

Hills of squash (Burpee Yellow Summer) each containing three plants were planted side-by-side in late May, 1996, in soil that had been prepared simply by turning and breaking up clods. All hills were cultivated and irrigated in identical fashion as required during growth. One hill was treated with chitosan salt solution by the procedure described above, and the other served as control. Fruits were harvested as they reached preferred size between July 9 and July 21. The study was terminated on July 21 due to an infestation of borers. The treated plants afforded 19 fruits compared to only 15 fruits for the control. This represents a yield enhancement of 27%.

### Example 2

Parallel rows of green beans were planted in identical fashion in late May, 1996, in soil that had been prepared by turning, breaking up clods, and raking smooth. Both rows were cultivated and irrigated as required during growth. One row was treated with chitosan salt solution, as described above, while the other served as control. The crop was harvested at weekly intervals until August 26, when it was judged that the plants were spent. The treated row produced 15 lb 8 oz of beans compared to 11 lb 6 oz for the control. This represents a yield enhancement of 36%.

### Example 3

Pepper plants (Lady Bell) were obtained commercially as seedlings approximately 5 inches tall and were transplanted in late May, 1996, to soil that had been turned and raked smooth. All plants were cultivated and irrigated in identical fashion throughout the growing season. Three plants were treated with chitosan salt solution as described above, while another three served as controls. Fruits were harvested as they reached preferred size throughout the growing season. The treated plants afforded a total of 46 fruits compared to 31 for the control. This represents a yield enhancement of 48%.

### Example 4

Parallel rows of yellow beans were planted in identical fashion in late May, 1996, in soil that was prepared by turning, breaking up clods, and raking smooth. Both rows were cultivated and irrigated as required during growth. One row was treated with chitosan salt solution as described above, while the other served as control. The crop was harvested at weekly intervals until July 24 when it was judged that the plants were spent. The treated row produced 10 lb 0 oz of beans compared to 9 lb 0 oz for the control. This represents a yield enhancement of 11%.

## Claims

1. A method for preparing an aqueous liquid solution suitable for the treatment of growing cotyledonous plants having their first true leaves comprising:
(1) forming an aqueous liquid solution comprising a water-soluble salt of chitosan prepared by reaction at a temperature of 45 to 85°C of a water-soluble chitosan containing at least 65 mole % D-glucosamine residues and a molecular weight of at least 50,000, with an acid which forms water-soluble salts with chitosan, excluding sulfuric and phosphoric acids, in which solution the ratio of acid equivalents to amino groups derived from the chitosan is 1.02-1.20; and
(2) diluting the chitosan salt solution from step (1) with water such that an aqueous liquid solution having dissolved therein 0.01-1.5 wt% of a water soluble salt of chitosan is provided.

2. The process of claim 1 wherein step (1) comprises forming an aqueous liquid solution comprising 2.5 wt% of a water-soluble salt of chitosan prepared by reaction at a temperature of 50 to 75°C of a water-soluble chitosan with an acid which forms water-soluble salts with chitosan, excluding sulfuric and phosphoric acids, for from 3 to 5 hours, in which solution the ratio of acid equivalents to amino groups derived from the chitosan is 1.02 to 1.20.

3. The process of claim 1 or 2 wherein the acid is an organic acid.

4. The process of claim 3 wherein the organic acid is selected from lactic acid, glycolic acid, glutamic acid, acetic acid and mixtures thereof.

5. A method for improving the yield of growing cotyledonous plants having their first true leaves comprising;
(1) applying to the exposed surface of the leaves the aqueous liquid solution prepared by the method of any one of claims 1-4; and
(2) repeating step (1) at least one time.

6. The method of claim 5 wherein at least a portion of the plant is edible by humans.

7. The method of claim 6 wherein the plant is an edible vegetable.

8. The method of claim 7 wherein the plant genus is selected from Allium, Apium, Asparagus, Beta, Brassica, Capsicum, Citrullis, Cucurbita, Daucus, Frageria, Lactuca, Lycopersicum, Phaseolus, Solanum, Spinachia and Zea.

9. The method of claim 8 wherein the plant is selected from asparagus, beans, beets, broccoli, carrots, celery, corn, egg plant, lettuce, melons, onions, peas, peppers, potatoes, spinach, squash, strawberries and tomatoes.

## Revendications

1. Procédé de préparation d'une solution liquide aqueuse appropriée pour le traitement de plantes à cotylédons en croissance présentant leurs premières feuilles vraies, comprenant les étapes consistant à :
(1) former une solution liquide aqueuse comprenant un sel hydrosoluble de chitosan préparé en faisant réagir, à une température comprise entre 45 et 85 °C, un chitosan hydrosoluble contenant au moins 65 % en mole de résidus D-glucosamine et présentant un poids moléculaire au moins égal à 50 000, avec un acide qui forme des sels hydrosolubles avec le chitosan, à l'exclusion des acides sulfurique et phosphorique, solution dans laquelle le rapport entre équivalents acide et groupes amino dérivés du chitosan est compris entre 1,02 et 1,20 ; et
(2) diluer la solution saline de chitosan de l'étape (1) avec de l'eau de façon à obtenir une solution liquide aqueuse dans laquelle est dissous 0,01 à 1,5 % en poids d'un sel hydrosoluble de chitosan.

2. Procédé selon la revendication 1, dans lequel l'étape (1) comprend la formation d'une solution liquide aqueuse comprenant 2,5 % en poids d'un sel hydrosoluble de chitosan préparé en faisant réagir, à une température comprise entre 50 et 75 °C, un chitosan hydrosoluble avec un acide qui forme des sels hydrosolubles avec le chitosan, à l'exclusion des acides sulfurique et phosphorique, pendant 3 à 5 heures, solution dans laquelle le rapport entre équivalents acide et groupes amino dérivés du chitosan est compris entre 1,02 et 1,20.

3. Procédé selon la revendication 1 ou 2, dans lequel l'acide est un acide organique.

4. Procédé selon la revendication 3, dans lequel l'acide organique est choisi parmi l'acide lactique, l'acide glycolique, l'acide glutamique, l'acide acétique, et des mélanges de ceux-ci.

5. Procédé d'amélioration du rendement de plantes à cotylédons en croissance présentant leurs premières feuilles vraies, comprenant les étapes consistant à :
(1) appliquer sur la surface exposée des feuilles la solution liquide aqueuse préparée par le procédé selon l'une quelconque des revendications 1 à 4 ; et
(2) répéter l'étape (1) au moins une fois.

6. Procédé selon la revendication 5, dans lequel au moins une portion de la plante est comestible pour les humains.

7. Procédé selon la revendication 6, dans lequel la plante est un végétal comestible.

8. Procédé selon la revendication 7, dans lequel le genre de la plante est choisi parmi Allium, Apium, Asparagus, Beta, Brassica, Capsicum, Citrullis, Cucurbita, Daucus, Frageria, Lactuca, Lycopersicum, Phaseolus, Solanum, Spinachia et Zea.

9. Procédé selon la revendication 8, dans lequel la plante est choisie parmi l'asperge, les haricots, les betteraves, les brocolis, les carottes, le céleri, le maïs, l'aubergine, la laitue, le melon, les oignons, les pois, les poivrons, les pommes de terre, les épinards, les courges, les fraises et les tomates.

## Patentansprüche

1. Verfahren zur Zubereitung einer wässerigen Flüssigkeitslösung, die sich zur Behandlung von im Wachstum befindlichen keimblättrigen Pflanzen, die ihre ersten echten Blätter haben, eignet, umfassend:
(1) Bildung einer wässerigen Flüssigkeitslösung, die ein wasserlösliches Chitosansalz beinhaltet, das durch Reaktion von wasserlöslichem Chitosan, das mindestens 65 mol-% D-Glucosaminreste und ein Molekulargewicht von mindestens 50.000 aufweist, mit einer Säure, ausschließlich von Schwefelsäure und Phosphorsäure, die mit Chitosan wasserlösliche Salze bildet, bei einer Temperatur von 45 °C bis 85 °C zubereitet wird, wobei in dieser Lösung das Verhältnis der Säureäquivalente zu den aus dem Chitosan gewonnenen Aminogruppen 1,02 bis 1,20 beträgt und
(2) Verdünnung der Chitosansalzlösung aus Schritt (1) mit Wasser derart, daß sich eine wässerige Flüssigkeitslösung ergibt, in der 0,01 bis 1,5 Gew.-% eines wasserlöslichen Chitosansalzes aufgelöst sind.

2. Verfahren gemäß Anspruch 1, wobei Schritt (1) die Bildung einer wässerigen Flüssigkeitslösung beinhaltet, die 2,5 Gew.-% eines wasserlöslichen Chitosansalzes enthält, das durch Reaktion von wasserlöslichem Chitosan mit einer Säure, ausschließlich von Schwefelsäure und Phosphorsäure, die mit Chitosan wasserlösliche Salze bildet, für eine Dauer von 3 bis 5 Stunden bei einer Temperatur von 50 °C bis 75 °C zubereitet wird, wobei in dieser Lösung das Verhältnis der Säureäquivalente zu den aus dem Chitosan gewonnenen Aminogruppen 1,02 bis 1,20 beträgt.

3. Verfahren gemäß Anspruch 1 oder 2, wobei die Säure eine organische Säure ist.

4. Verfahren gemäß Anspruch 3, wobei die organische Säure ausgewählt wird aus Milchsäure, Glykolsäure, Glutaminsäure, Essigsäure und Mischungen davon.

5. Verfahren zur Verbesserung des Ertrags von im Wachstum befindlichen keimblättrigen Pflanzen, die ihre ersten echten Blätter haben, umfassend:
(1) Auftragen der nach dem Verfahren nach einem der Ansprüche 1 bis 4 zubereiteten wässerigen Flüssigkeitslösung auf die frei liegende Oberfläche der Blätter und
(2) Wiederholen von Schritt (1) mindestens ein Mal.

6. Verfahren gemäß Anspruch 5, wobei mindestens ein Teil der Pflanze für den menschlichen Verzehr geeignet ist.

7. Verfahren gemäß Anspruch 6, wobei die Pflanze ein essbares Gemüse ist.

8. Verfahren gemäß Anspruch 7, wobei die Pflanzengattung ausgewählt wird aus Allium (Zwiebel), Apium (Sellerie), Asparagus (Spargel), Beta (Rüben), Brassica (Broccoli), Capsicum (Paprika), Citrullis (Melone), Cucurbita (Kürbis), Daucus (Karotten), Frageria (Erdbeeren), Lactuca (Kopfsalat), Lycopersicum (Tomaten), Phaseolus (Bohnen), Solanum (Auberginen), Spinachia (Spinat) und Zea (Mais).

9. Verfahren gemäß Anspruch 8, wobei die Pflanze ausgewählt wird aus Spargel, Bohnen, Rüben, Broccoli, Karotten, Sellerie, Mais, Auberginen, Kopfsalat, Melonen, Zwiebeln, Erbsen, Paprika, Kartoffeln, Spinat, Kürbis, Erdbeeren und Tomaten.
